**Europäisches Patentamt**

**European Patent Office**

**Office européen des brevets**

(19)

(11) Numéro de publication: **0 118 351**
**B1**

(12) **FASCICULE DE BREVET EUROPÉEN**

(45) Date de publication du fascicule du brevet:
**14.01.87**

(51) Int. Cl.⁴: **C 08 L 27/06,** C 09 D 3/76

(21) Numéro de dépôt: **84400340.0**

(22) Date de dépôt: **20.02.84**

(54) **Compositions polymères pour plastisols et organosols conduisant, par enduction, à des revêtements présentant un aspect de surface mat et procédé de préparation.**

(30) Priorité: **03.03.83 FR 8303469**

(43) Date de publication de la demande:
**12.09.84 Bulletin 84/37**

(45) Mention de la délivrance du brevet:
**14.01.87 Bulletin 87/3**

(84) Etats contractants désignés:
**AT BE CH DE GB IT LI LU NL SE**

(56) Documents cité:
**FR-A-1 306 160**
**FR-A-1 358 641**
**FR-A-1 517 922**
**FR-A-2 103 136**
**US-A-3 000 754**

(73) Titulaire: **ATOCHEM, 4 & 8, Cours Michelet La Défense 10, F-92800 Puteaux (FR)**

(72) Inventeur: **Capello, Gérard, l'Oustau Chemin du Lac, F-04160 Châteaux- Arnoux (FR)**
Inventeur: **Espariat, Jean- Pierre, Chemin des Pescadous, F-04350 Malijai (FR)**
Inventeur: **Brulet, Daniel, 13, rue de la Colline, F-04600 Saint- Auban (FR)**

(74) Mandataire: **Coron, Guy, ATOCHEM Département Propriété Industrielle, F-92091 Paris la Défense 10 Cédex 42 (FR)**

## Description

La présente invention concerne des compositions polymères aptes à donner des plastisols et des organosols conduisant, par enduction, à des revêtements présentant un aspect de surface mat. Elle concerne également un procédé de préparation desdites compositions ainsi que les revêtements obtenus, par enduction, à partir des plastisols ou organosols comprenant lesdites compositions.

On sait qu'un plastisol est une suspension finement divisée d'un homo- ou co-polymère du chlorure de vinyle dans un ou plusieurs plastifiants liquides dont la tendance à dissoudre la résine à la température ambiante est faible ou nulle mais qui par chauffage deviennent un solvant de ladite résine. On sait également que les organosols sont analogues aux plastisols à cela près qu'ils contiennent environ 5 à 10 % en poids d'au moins un diluant ou dispersant volatil. Aux températures élevées la résine de chlorure de vinyle est complètement dissoute dans les plastifiants, formant une masse plasti que essentiellement homogène qui, après refroidissement, se présente sous la forme d'une masse relativement souple. La transformation, par traitement thermique, du plastisol ou de l'organosol en une masse essentiellement homogène est appelée "gélification". Des additifs tels que charges, stabilisants et colorants sont, en général, également presents dans les plastisols et organosols. Les plastisols et organosols sont mis en oeuvre de façon appropriée dans un grand nombre de techniques telles que notamment l'enduction, le moulage par rotation, le trempage, la projection.

Les homo- et co-polymères du chlorure de vinyle essentiellement utilisés pour la préparation des plastisols et des organosols sont des résines de dispersion. Ces résines sont préparées par homopolymérisation du chlorure de vinyle en émulsion ou en microsuspension ou copolymérisation du chlorure de vinyle en émulsion ou en microsuspension avec au moins un autre monomère copolymérisable avec le chlorure de vinyle. Cette homo- ou co-polymérisation fournit industriellement un latex aqueux contenant généralement de 30 à 60 % en poids de matière sèche formée de particules d'homo- ou de co-polymère du chlorure de vinyle présentant un diamètre généralement compris entre 0,1 et 3 μm. Pour obtenir le polymère à l'état pulvérulent sec on traite ledit latex, éventuellement après concentration, par exemple par ultrafiltration, généralement par séchage et notamment par séchage par atomisation. Par séchage par atomisation lesdites particules d'homo- ou co-polymère du chlorure de vinyle forment des agglomérats ayant un diamètre de 30 à 150 μm, qu'il convient de soumettre à un broyage pour les réduire à une dimension particulaire plus convenable pour la préparation desdits plastisols et organosols.

On sait que pour la fabrication de revêtements par enduction à partir de plastisols et organosols, et notamment de revêtements de sols et de revêtements muraux, on cherche à obtenir des revêtements presentant un aspect de surface mat. Lesdits revêtements comportent généralement un support à base d'amiante, de papier, de carton, de mat de verre, de laine de roche, etc., recouvert de deux couches superposées, une première couche de nature cellulaire, dite sous-couche, en contact avec le support et une deuxième couche compacte dite couche de surface. Chacune des couches est obtenue à partir d'un plastisol ou organosol selon une technique continue d'enduction. Cette technique peut etre mise en oeuvre au moyen d'une machine comprenant une tête d'enduction du type à racle, à cylindres ou à cadre rotatif qui dépose une couche d'un premier plastisol ou organosol sur ledit support et un four tunnel dans lequel est réalisée une prégélification de ladite couche. De la même manière on dépose sur la première couche, après prégélification, une couche d'un deuxième plastisol ou organosol et réalise dans un four tunnel le complément de gélification de la première couche et la gélification de la deuxième couche. Avant enduction chaque plastisol ou organosol est soumis, si besoin est, à une filtration sur tamis destinée à en éliminer les particules grossières éventuellement présentes ou à un affinage par passage sur un broyeur à trois cylindres et éventuellement à un débullage sous pression réduite. Pour obtenir un revêtement présentant un aspect de surface mat diverses méthodes sont couramment utilisées, quelquefois conjointement, portant sur le choix de la ou des résines mises en oeuvre pour réaliser la couche de surface et sur les conditions de gélification de ladite couche. Ce sont:

- l'utilisation, en mélange avec une résine de dispersion, d'une résine de charge formée de particules de diamètre essentiellement compris entre 20 et 100 μm, préparée par homo- ou co-polymérisation du chlorure de vinyle en suspension ou en masse,
- la mise en oeuvre d'un traitement de gélification à température relativement et anormalement basse.

Ces méthodes présentent cependant divers inconvénients: La présence de grosses particules dans un plastisol ou un organosol provoque le colmatage du tamis au cours de la filtration dudit plastisol ou organosol. Elle ne permet pas de réaliser, par enduction, une couche de surface mince, d'épaisseur inférieure à 150 μm, exempte de défauts, défauts constitués par la présence de grains en relief sur ladite couche. Elle conduit de plus à des revêtements présentant des propriétés mécaniques, notamment de résistance à la traction, réduites. En outre pour la réalisation de couches de surface très minces, d'environ 70 à 80 μm d'épaisseur, qui ne peuvent être obtenues que par enduction au moyen d'une machine à tête d'enduction du type à lame d'air, on est obligé d'utiliser des plastisols ou des organosols de grande fluidité, pour la préparation desquels l'emploi d'une résine de charge est à exclure, ou tout au moins à limiter, car ladite résine donne rapidement lieu à sédimentation. La mise en oeuvre d'un traitement de gélification à température relativement et anormalement basse conduit à des revêtements ne présentant pas les propriétés mécaniques optimales (résistance à la traction, résistance à l'abrasion) que l'on est en droit d'attendre de l'emploi de la résine utilisée.

Les plastisols et organosols préparés à partir des compositions polymères selon l'invention ne présentent pas les inconvénients énoncés ci-dessus. Ils permettent d'obtenir, par enduction, des revêtements comportant

2

une couche de surface exempte de défauts et présentant un aspect de surface mat, couche dont l'épaisseur peut être inférieure à 150 µm et descendre jusqu'à 70 µm. Ladite couche peut etre réalisée en utilisant les conditions optimales de gélification.

Les compositions polymères objet de l'invention comprennent au moins deux polymères du chlorure de vinyle. Lesdits polymères sont des résines de dispersion dont les températures de prégélification présentent entre elles une différence au moins égale à 25°C et de préférence à 30°C et dont le rapport pondéral de la résine dont la température de prégélification $\theta_1$ est la plus élevée à la résine dont la température de prégélification $\theta_2$ est la plus basse est compris entre 0,7 et 9 et de préférence entre 2 et 5.

La demanderesse a en effet trouvé que l'utilisation, comme composition polymère pour plastisols et organosols, d'un ensemble comportant au moins deux résines de dispersion dont les températures de prégélification présentent entre elles une différence suffisante et dont le rapport pondéral de la résine à température de prégélification la plus élevée $\theta_1$ à la résine à température de prégélification la plus basse $\theta_2$ est compris entre certaines limites, permet d'obtenir, par enduction, à partir desdits plastisols et organosols, des revêtements presentant un aspect de surface mat.

Par "polymères du chlorure de vinyle" on entend selon l'invention les homo- et co-polymères, ces derniers contenant au moins 50 % en poids de chlorure de vinyle et au moins un monomère copolymérisable avec le chlorure de vinyle. Les monomères copolymérisables sont ceux généralement employés dans les techniques classiques de copolymérisation du chlorure de vinyle. On peut citer les esters vinyliques des acides mono- et poly-carboxyliques, tels que acétate, propionate, benzoate de vinyle; les acides insaturés mono- et poly-carboxyliques, tels que acrylique, méthacrylique, maléique, fumarique, itaconique, ainsi que leurs esters aliphatiques, cycloaliphatiques, aromatiques, leurs amides, leurs nitriles; les halogénures d'alkyle, de vinyle, de vinylidène; les alkylvinyléthers; les oléfines.

Par "résines de dispersion" on entend selon l'invention les polymères du chlorure de vinyle qui sont issus de latex préparés par tout procédé d'homopolymérisation et de copolymérisation du chlorure de vinyle en émulsion ou en microsuspension et notamment par le procédé de polymérisation du chlorure de vinyle en microsuspension ensemencée decrit dans de brevet français No 75 13582 publie sous le No 2 309 569 et qui sont récupérés à l'état pulvérulent sec par traitement desdits latex par séchage par atomisation. Lesdits latex contiennent généralement, éventuellement après concentration, par exemple par ultrafiltration, de 40 à 80 % en poids de matière sèche formée de particules d'homo- ou co-polymère du chlorure de vinyle présentant un diamètre généralement compris entre 0,1 et 3 µm.

Le séchage par atomisation est une technique bien connue mise en oeuvre dans un appareil comprenant un dispositif d'atomisation et une chambre d'atomisation dans laquelle ledit dispositif disperse le latex en de fins jets de gouttelettes. Dans ce dispositif, des gaz chauds, généralement de l'air, sont mis au contact de la masse pulvérisée et permettent l'évaporation de l'eau contenue dans chaque gouttelette. La température des gaz à l'entrée de la chambre d'atomisation est généralement comprise entre 170 et 260°C et leur température à la sortie entre 65 et 80°C. A partir des particules du latex des agglomérats de polymère de diamètre généralement compris entre 30 et 150 µm sont ainsi formés en continu, séparés des gaz chauds, puis soumis, également en continu, à un broyage destiné à les amener à des dimensions comprises généralement entre 5 et 30 µm. Le broyage peut être réalisé notamment à l'aide d'un dispositif employant l'energie mécanique ou l'air comprimé pour précipiter les agglomérats contre une paroi solide et ainsi en réduire les dimensions. Après broyage la résine obtenue est mise en silo, par l'intermédiaire généralement d'une installation de transport pneumatique, en vue de sa commercialisation, soit en vrac, soit en sacs apres ensachage.

Par "température de prègélification" d'une résine de dispersion on entend selon l'invention la température correspondant au premier pic de la courbe représentant la valeur du couple observée en fonction de la température lorsqu'on soumet à un cisaillement continu, dans des conditions de chauffage et de mesure déterminées, au moyen de l'appareil connu industriellement sous l'appellation de ROTOVISKO RV3 commercialisé par la Société HERAEUS, un échantillon de plastisol composé de 100 parties en poids de ladite résine, de 60 parties en poids de phtalate de di-éthyl-2 hexyle comme plastifiant et de 2 parties en poids de laurate de baryum et de cadmium comme stabilisant. Ledit plastisol est préparé à température ambiante sur 400 g de résine, dans un bécher de 2 litres de capacité, par mélange de ses composants au moyen d'un agitateur à turbine de 7 cm de diamètre tournant à 2000 tr/min pendant 90 secondes, puis soumis à un débullage pendant 1 heure sous une pression de 50 mbars. La mesure est faite après conditionnement de 24 heures à 25°C. Ledit appareil est équipé du dispositif de mesure PK 401 comprenant un systéme plan-cône et un bloc de métal chauffé électriquement avec canaux de refroidissement. Ledit bloc de métal forme une enceinte à l'interieur de laquelle est placé le dispositif de mesure. L'angle d'ouverture du systême plan-cône est de 1 degré, la vitesse de rotation du cône de 0,1 tr/min et le bloc de métal est soumis à une loi linéaire de montée en température de 1°C par minute.

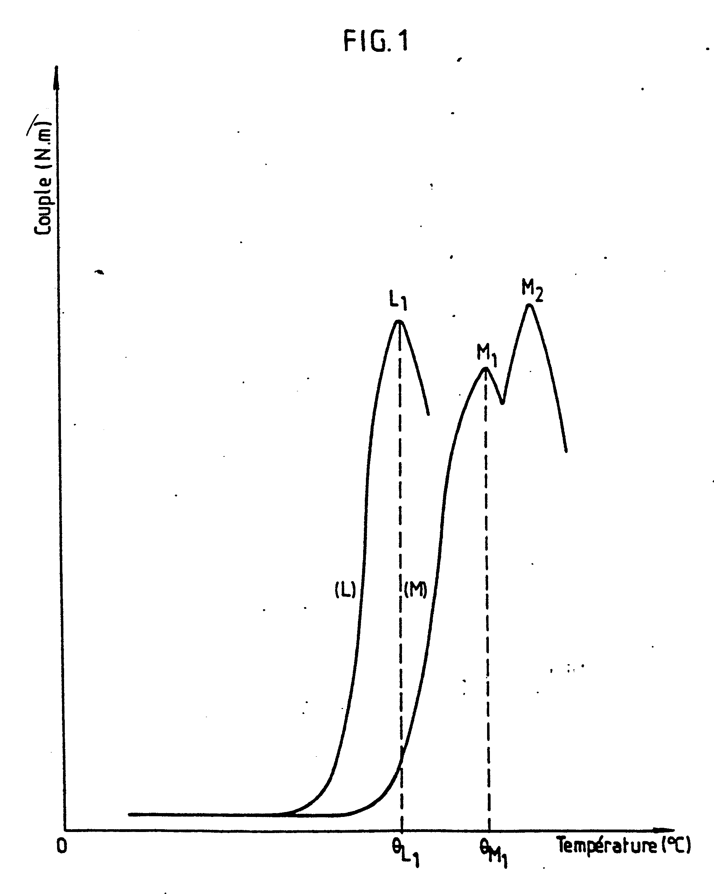

La figure 1 de la planche unique de dessin ci-jointe représente des courbes montrant la valeur du couple observée (N.m) portée en ordonnée en fonction de la température (°C) du bloc de métal portée en abscisse, valeur déterminée et enregistrée à l'aide de l'appareil mentionné et dans les conditions opératoires définies ci-dessus. Sur la figure 1 les courbes (L) et (M), qui comportent respectivement un pic (point $L_1$) et deux pics (points $M_1$ et $M_2$), sont relatives à des résines de dispersion dont les températures de prégélification correspondent respectivement aux valeurs $\theta_{L1}$ et $\theta_{M1}$ des abscisses des points $L_1$ et $H_1$.

Le choix, à l'intérieur des limites indiquées, de la valeur du rapport pondéral de la résine à température de prégélification la plus élevée $\theta_1$ à la résine à température de prégélification la plus basse $\theta_2$ dépend de la

matité de surface recherchée pour le revêtement et peut facilement être déterminé dans chaque cas par des essais. Pour une valeur minimale donnée de la matité de surface les limites dudit rapport sont d'autant plus larges que la différence $\theta_1-\theta_2$ des temperatures de pregelification des deux resines est plus élevée.

Pour obtenir une résine de dispersion présentant une température de prégélification déterminée on peut utiliser tout moyen approprié ou combinaison de moyens appropriés. On opère généralement par action sur la température de polymérisation qui, toutes choses égales par ailleurs, doit être d'autant plus basse que ladite température de prégélification visée est plus élevée et/ou par un choix convenable qualitatif et quantitatif du ou des monomères copolymérisables avec le chlorure de vinyle que l'on met éventuellement en oeuvre pour la préparation de ladite résine. Les résines de dispersion utilisables selon l'invention ont une température de prégélification généralement comprise entre 70 et 130°C.

La préparation des plastisols et des organosols à partir de la composition polymère selon l'invention nécessite en général l'emploi d'environ 35 à 100 %, en poids par rapport à la composition polymère, d'un ou plusieurs plastifiants liquides.

Comme plastifiants liquides on peut citer notamment les phtalates d'alkyle tels que, par exemple, le phtalate de dibutyle, le phtalate de butyle et de benzyle, le phtalate de butyle et d'octyle le phtalate de di-n-hexyle, le phtalate de di-éthyl-2 hexyle, le phtalate de diisooctyle, le phtalate de diisononyle, le phtalate de diisodécyle, les phtalates d'alcools normaux en $C_6$, $C_8$ et $C_{10}$; les phosphates d'aryle tels que, par exemple, le phosphate de tricrésyle, le phosphate de crésyle et de diphényle, le phosphate d'octyle et de diphényle; les adipates d'alkyle tels que, par exemple, l'adipate de di-éthyl-2 hexyle, l'adipate de décyle; les paraffines chlorées, l'huile de soja époxydée; l'isobutyrate de texanol.

Ces plastifiants peuvent également contenir, le cas échéant, des additifs tels que notamment des agents tensioactifs abaisseurs de viscosité comme le nonylphénol oxyéthyléné et le monolaurate de polyéthyléne glycol; des stabilisants vis à vis de la chaleur tels que les savons ou phénates de zinc, calcium, cadmium, baryum, les dérivés basiques de plomb, les composés organiques d'étain comme les mercaptans de dialkylétain et les maléates de dialkylétain, les esters d'acides gras époxydés, les phosphites d'alkyldiphényle et de triaryle; des stabilisants vis à vis de la lumière tels que les salicylates de phényle, les benzophénones, les benzotriazoles; des pigments, des colorants et des charges. Parmi les diluants et dispersants volatiles utilisables pour la préparation des organosols on peut citer notamment le dodécylbenzéne et le kérosène sans odeur.

La préparation des plastisols se fait à l'aide des techniques bien connues de l'homme de l'art soit en incorporant séparément au plastifiant lesdites résines de dispersion que comprend la composition polymère, soit en incorporant au plastifiant ladite composition polymère sous forme d'un mélange desdites résines.

Selon le procédé, objet de l'invention, de préparation d'une composition polymère sous forme d'un mélange desdites résines on réalise une opération de séchage par atomisation sur chacun des latex desdites résines, puis une opération de broyage des agglomérats de polymère ainsi formés et la mise en silo des résines obtenues.

Selon le procédé de l'invention les opérations de séchage par atomisation desdits latex sont réalisées dans un même appareil, séparément et par périodes alternées, et les résines obtenues sont mises dans un même silo. La mise en contact des résines peut avoir lieu avant ou après broyage.

Les durées des périodes d'atomisation ne doivent pas être trop faibles pour limiter la fréquence du phénomène de coatomisation partielle des latex qui risque de se produire à chaque changement de latex et qui, si ladite fréquence est trop élevée, conduit à une composition polymère à partir de laquelle les revêtements obtenus présentent une matité de surface faible. Elles sont généralement supérieures à 20 secondes.

Les durées des périodes d'atomisation ne doivent pas être trop élevées pour éviter le risque d'obtention d'une composition polymére trop hétérogène. Elles sont généralement inférieures à 1800 secondes. L'emploi éventuel, pour recueillir la composition polymère, d'un silo homogénéiseur permet toutefois d'opérer avec des périodes d'atomisation dont la durée peut être plus élevée et n'est limitée supérieurement, toutes choses égales par ailleurs, que par la capacité du silo.

Il est généralement avantageux d'utiliser les mêmes conditions operatoires d'atomisation (nature et débit des gaz chauds, températures des gaz à l'entrée et à la sortie de la chambre d'atomisation) pour réaliser le séchage par atomisation des latex. Dans ces conditions, si $t_1$ et $p_1$ sont respectivement la durée des périodes d'atomisation et la teneur pondérale en matière sèche du latex de la résine à température de prégélification la plus élevée $\theta_1$, si $t_2$ et $p_2$ sont respectivement la durée des périodes d'atomisation et la teneur pondérale en matière sèche du latex de la résine à température de prégélification la plus basse $\theta_2$ et si on désire opérer de manière que les durées $t_1$ et $t_2$ soient sensiblement constantes, on doit choisir des durées $t_1$ et $t_2$ telles que la valeur du rapport $t_1\,p_1/t_2\,p_2$ soit égale à la valeur, que l'on s'est fixée, du rapport pondéral de la résine à température de prégélification la plus élevée $\theta_1$ à la résine à température de prégélification la plus basse $\theta_2$ de la composition polymère à préparer. Avant de réaliser les opérations de séchage par atomisation il peut être avantageux d'amener les latex à une teneur pondérale en matière sèche déterminée, voire à la même teneur pondérale en matière sèche, par concentration desdits latex, par exemple par ultrafiltration, ou par addition d'eau désionisée.

La préparation des plastisols et des organosols se fait généralement dans un mélangeur de type conventionnel qui peut être par exemple un mélangeur planétaire ou un mélangeur à turbine selon que la consistance du plastisol ou de l'organosol à préparer est plus ou moins élevée. Le plastisol ou l'organosol obtenu est soumis, si besoin est, à une filtration sur tamis ou à un affinage par passage sur un broyeur à trois cylindres et éventuellement à un débullage sous pression réduite. Le plastisol ou l'organosol ainsi préparé est prêt à être utilisé pour la fabrication de revêtements par enduction selon la technique décrite précédemment. L'épaisseur moyenne de la couche de surface du revêtement est généralement inférieure à 150 µm et peut descendre jusqu'à 70 µm.

La brillance, inverse de la matité, de la surface du revêtement est mesurée par réflexion d'une lumière incidente. Elle est exprimée par le rapport en pourcent de la quantité de lumière renvoyée au voisinage de la direction de réflexion spéculaire sous un angle de réflexion de 60 degrés à la quantité de lumière renvoyée par un verre noir poli et défini recevant la lumière également sous une incidence de 60 degrés. Elle est déterminée au moyen de tout appareil approprié et notamment de l'appareil connu industriellement sous l'appellation de réflectomètre PHOTOVOLT 670 commercialisé par la Société PARIS-LABO.

On donne ci-aprés a titre indicatif, des exemples de réalisation de l'invention.

Les exemples 1 à 6, 9, 10, 13, 14, 20 et 21 sont donnés à titre comparatif.

Les exemples 7, 8, 11, 12, 15 à 19 et 22 à 32 sont selon l'invention.

## Exemples 1 à 22

On utilise des résines de dispersion A, B, C, D, E récupérées à partir de leur latex préparé comme indiqué ci-aprés, dans un autoclave de 1000 litres de capacité, selon le procédé de polymérisation du chlorure de vinyle en microsuspension ensemencée décrit dans FR-A-2 309 569.

## Préparation des latex des résines de dispersion A, B, C, D, E

On met en oeuvre deux latex d'ensemencement de chlorure de polyvinyle:
- un premier latex à 32 % de teneur pondérale en matière sèche, préalablement préparé en microsuspension, dont les particules ont un diamètre moyen de 0,51 µm et contenant 2 %, en poids par rapport au polymère, de peroxyde de lauroyle,
- un deuxième latex à 43 % de teneur pondérale en matière sèche, préalablement préparé en émulsion, dont les particules ont un diamètre moyen de 0,13 µm et ne contenant pas de peroxyde de lauroyle.

On introduit dans l'autoclave les ingrédients dont la nature et la quantité sont portées dans le tableau 1.

**TABLEAU 1**

|  | Références des résines | | | | |
|---|---|---|---|---|---|
|  | A | B | C | D | E |
| Eau désionisée (kg) | 255 | 255 | 255 | 255 | 255 |
| Chlorure de vinyle (kg) | 400 | 400 | 400 | 400 | 400 |
| Acétate de vinyle (kg) | — | — | — | — | 20 |
| Premier latex d'ensemencement (kg) | 65 | 65 | 65 | 65 | 65 |
| Deuxième latex d'ensemencement (kg) | 23 | 23 | 23 | 23 | 23 |
| Dodécylbenzène sulfonate de sodium (introduit en continu en 7 heures) (kg) | 2,8 | 2,8 | 2,8 | — | 2,8 |
| Laurylsulfate de sodium (introduit en continu en 6 heures) (kg) | — | — | — | 3 | — |
| Sulfate de cuivre $SO_4Cu,5H_2O$ (g) | 30 | 25 | 15 | 10 | 20 |
| Acide ascorbique (g) | 30 | 25 | 15 | 10 | 20 |
| Température de polymérisation (°C) | 43 | 48 | 52 | 57 | 52 |
| Durée de polymérisation (h) | 14 | 13 | 12 | 10 | 14 |
| Teneur pondérale en matière sèche des latex obtenus (%) | 52 | 52 | 53 | 54 | 53 |

On chauffe sous agitation le mélange réactionnel à une température donnée sous pression autogéne et maintient cette température pendant la durée de l'opération de polymérisation. Après polymérisation on dégaze le chlorure de vinyle qui n'a pas réagi. Dans le tableau 1 sont portées également la température et la durée de polymérisation et la teneur pondérale en matière sèche des latex obtenus.

**Récupération des résines de dispersion A, B, C, D, E**

Lesdits latex sont soumis à une opération de séchage par atomisation dans un appareil, connu industriellement sous l'appellation de NIRO F10, comportant un dispositif d'atomisation à turbine de 150 mm de diamètre, tournant à 18000 tr/min, placé à la partie supérieure d'une chambre d'atomisation de 45 m$^3$ de capacité alimentée par de l'air chaud. La température de l'air à l'entrée de la chambre d'atomisation est de 180°C, sa température à la sortie de 70°C et son débit de 2300 kg/h. Le débit de matière sèche est donné pour chaque resine dans le tableau 2.

**TABLEAU 2**

| | Références des résines | | | | |
|---|---|---|---|---|---|
| | A | B | C | D | E |
| Débit de matière sèche (kg/h) | 80 | 80 | 83,2 | 86,6 | 83,2 |

Les agglomérats de polymère ainsi formés sont soumis à une opération de broyage dans un broyeur connu industriellement sous l'appellation de MIKROPUL ACM 10, muni d'un plateau de broyage à broches tournant à 4800 tr/min et d'un sélecteur comportant 24 pales de 60 mm de hauteur tournant à 3000 tr/min. Le débit de l'air est de 26 kg/min.

Après broyage la résine obtenue est transférée par transport pneumatique dans un silo de 2 m$^3$ de capacité et de 2 m$^2$ de section horizontale puis mise en sacs. Les températures de prégélification des résines de dispersion A, B, C, D, E sont indiquées dans le tableau 3.

## TABLEAU 3

| | Références des résines | | | | |
|---|---|---|---|---|---|
| | A | B | C | D | E |
| Température de prégélification (°C) | 115 | 105 | 90 | 85 | 80 |

### Préparation du revêment

On prépare des revêtements comprenant comme support un papier siliconé de 150 g/m² sur lequel on réalise successivement une sous-couche de nature cellulaire et une couche de surface compacte.

### Préparation de la sous-couche

On prépare un organosol dont la composition en parties en poids est la suivante:

| | |
|---|---|
| Résine de dispersion D | 100 |
| Phtalate de di-éthyle-2 hexyle | 30 |
| Phtalate de butyle et de benzyle | 20 |
| Kérosène sans odeur | 10 |
| Huile de soja époxydée | 2 |
| Carbonate de calcium | 30 |
| Azodicarbonamide | 2,7 |
| Oxyde de zinc | 1,3 |

L'organosol est préparé à température ambiante sur 20 kg de résine, dans une cuve de 40 litres de capacité, par mélange de ses composants au moyen d'un agitateur à turbine de 12 cm de diamètre tournant à 1500 tr/min pendant 5 minutes, puis soumis à un débullage pendant 1 heure sous une pression de 50 mbars.

A l'aide d'une machine à enduire du type à racle on applique une couche de 500 g/m² de l'organosol sur le papier siliconé puis réalise une prégélification de ladite couche par passage d'une durée de 2 minutes dans un four tunnel a la temperature de 150°C.

**Préparation de la couche de surface**

On utilise le même appareillage que pour la préparation de la sous-couche.

A partir des résines de dispersion A, B, C, D, E on prépare des organosols dont la composition en parties en poids est la suivante:

| | |
|---|---|
| Résine(s) de dispersion | 100 |
| Phtalate de butyle et de benzyle | 30 |
| Isobutyrate de texanol | 5 |
| Dodécylbenzène | 10 |
| Stéarate d'octyle époxydé | 3 |
| Laurate de baryum et de cadmium | 2 |

Dans le tableau 4 on donne pour chaque exemple la proportion en parties en poids de chacune des résines de dispersion, mises en oeuvre séparément, pour 100 parties en poids de résine(s) de dispersion.

**TABLEAU 4**

| Exemples | Références des résines | | | | | Brillance (%) |
|---|---|---|---|---|---|---|
| | A | B | C | D | E | |
| 1 | 100 | — | — | — | — | 56 |
| 2 | 85 | 15 | — | — | — | 50 |
| 3 | 70 | 30 | — | — | — | 49 |
| 4 | 50 | 50 | — | — | — | 52 |
| 5 | 25 | 75 | — | — | — | 56 |
| 6 | — | 100 | — | — | — | 63 |
| 7 | 85 | — | 15 | — | — | 44 |
| 8 | 50 | — | 50 | — | — | 44 |
| 9 | 25 | — | 75 | — | — | 53 |
| 10 | — | — | 100 | — | — | 67 |
| 11 | 85 | — | — | 15 | — | 40 |
| 12 | 50 | — | — | 50 | — | 39 |
| 13 | 25 | — | — | 75 | — | 55 |
| 14 | — | — | — | 100 | — | 80 |
| 15 | 88 | — | — | — | 12 | 38 |
| 16 | 85 | — | — | — | 15 | 34 |
| 17 | 80 | — | — | — | 20 | 31 |
| 18 | 70 | — | — | — | 30 | 29 |
| 19 | 50 | — | — | — | 50 | 35 |
| 20 | 25 | — | — | — | 75 | 55 |
| 21 | — | — | — | — | 100 | 85 |
| 22 | 70 | — | — | 15 | 15 | 34 |

Les organosols sont préparés dans les mêmes conditions opératoires que celles utilisées pour la préparation de la souscouche.

Sur un échantillon du papier siliconé précédemment revêtu de la sous-couche on applique une couche de 90 g/m$^2$ d'un des organosols puis réalise le complément de gélification de la sous-couche et la géléfication de la couche de surface dans les conditions optimales par passage d'une durée de 2 minutes dans un four tunnel à la température de 190°C. On procéde de même avec d'autres échantillons du papier siliconé précédemment revêtu de la sous-couche et chacun des autres organosols.

On obtient des revêtements comportant une couche de surface exempte de défauts dont l'épaisseur est de 70 µm et dont la valeur de la brillance, déterminée à l'aide du réflectométre PHOTOVOLT 670, est indiquée pour chacun des exemples dans le tableau 4. Dans les conditions opératoires utilisées on considére que la couche de surface présente un aspect de surface mat lorsque la brillance est inférieure à 45 %.

On voit que la brillance de la couche de surface des revêtements obtenus dans les exemples 7, 8, 11, 12, 15 à 19 et 22 selon l'invention est inférieure à 45 % et que ce n'est pas le cas de la brillance de la couche de surface des revêtements obtenus dans les exemples comparatifs 1 à 6, 9, 10, 13, 14, 20 et 21.

## Exemples 23 à 32

On utilise les résines de dispersion A, C, D, E dont les latex sont préparés comme indiqué dans les exemples 1 à 22 mais lesdites résines de dispersion sont récupérées sous forme de mélanges comprenant au moins deux résines. L'appareillage utilisé pour la récupération des résines de dispersion est le même que dans les exemples 1 à 22. Les conditions de récupération n'en différent que par le fait que les opérations de séchage par atomisation desdits latex sont réalisées par périodes alternées. Au préalable les latex des résines de dispersion C, D, E sont amenés à la teneur pondérale en matière sèche de 52 % du latex de la résine de dispersion A par addition d'eau désionisée.

Dans le tableau 5 on donne pour chaque exemple les durées des périodes d'atomisation et la proportion en parties en poids de chacune des résines de dispersion mises en oeuvre pour 100 parties en poids du mélange desdites résines.

# 0 118 351

**TABLEAU 5**

| Exemples | Durées des périodes d'atomisation (secondes) | | | | Proportion en parties en poids de chacune des résines de dispersion pour 100 parties en poids du mélange desdites résines | | | | Brillance (%) |
|---|---|---|---|---|---|---|---|---|---|
| | A | C | D | E | A | C | D | E | |
| 23 | 680 | 120 | — | — | 85 | 15 | — | — | 44 |
| 24 | 200 | 200 | — | — | 50 | 50 | — | — | 44 |
| 25 | 170 | — | 30 | — | 85 | — | 15 | — | 41 |
| 26 | 150 | — | 150 | — | 50 | — | 50 | — | 40 |
| 27 | 1760 | — | — | 240 | 88 | — | — | 12 | 39 |
| 28 | 340 | — | — | 60 | 85 | — | — | 15 | 34 |
| 29 | 800 | — | — | 200 | 80 | — | — | 20 | 31 |
| 30 | 210 | — | — | 90 | 70 | — | — | 30 | 28 |
| 31 | 240 | — | — | 240 | 50 | — | — | 50 | 35 |
| 32 | 280 | — | 60 | 60 | 70 | — | 15 | 15 | 34 |

L'appareillage utilisé pour la préparation des revêtements est le même que dans les exemples 1 à 22. Les conditions de préparation des revêtements n'en différent que par le fait que, pour la préparation de l'organosol utilisé pour la fabrication de la couche de surface, les résines de dispersion sont mises en oeuvre sous forme des mélanges ainsi préparés.

On obtient des revêtements comportant une couche de surface exempte de défauts dont l'épaisseur est de 70 µm et dont là valeur de la brillance, déterminée à l'aide du réflectométre PHOTOVOLT 670, est indiquée pour chacun des exemples dans le tableau 5. Dans les conditions opératoires utilisées on considére que l'a couche de surface présente un aspect de surface mat lorsque la brillance est inférieure à 45 %.

On voit que la brillance de la couche de surface des revêtements obtenus dans les exemples 23 à 32 selon l'invention est inférieure à 45 %.

**Revendications** pour les Etats contractants: BE, CH, DE, GB, IT, LI, LU, NL, SE.

1. Composition polymère apte à donner des plastisols et des organosols conduisant, par enduction, à des revêtements présentant un aspect de surface mat, ladite composition comprenant au moins deux polymères du chlorure de vinyle et étant caractérisée par le fait que lesdits polymères sont des résines de dispersion dont les températures de prégélification présentent entre elles une différence au moins égale à 25°C et de préférence à 30°C et dont le rapport pondéral de la resine dont la temperature de pregelification $\theta_1$ est la plus élévée à la résine dont la température de prégélification $\theta_2$ est la plus basse est compris entre 0,7 et 9 et de préférence entre 2 et 5.

2. Composition polymére selon la revendication 1, caractérisée par le fait qu'elle est sous forme d'un mélange desdites résines.

3. Procédé de préparation d'une composition polymére selon la revendication 2, selon lequel on réalise une opération de séchage par atomisation sur chacun des latex desdites résines, puis une opération de broyage des agglomérats de polymère ainsi formés et la mise en silo des résines obtenues, caractérisé par le fait que les opérations de séchage par atomisation desdits latex sont réalisées dans un même appareil, séparément et par périodes alternées, et que les résines obtenues sont mises dans un même silo.

4. Procédé selon la revendication 3, caractérisé par le fait que les durées des périodes d'atomisation sont supérieures à 20 secondes.

5. Procédé selon l'une quelconque des revendications 3 et 4, caractérisé par le fait que les durées des periodes d'atomisation inférieures à 1800 secondes.

6. Procédé selon l'une quelconque des revendications 3 à 5, caractérisé par le fait que le silo est homogénéiseur.

7. Revêtements comportant une couche de surface exempte de défauts et présentant un aspect de surface mat, caractérisés par le fait que ladite couche est obtenue par enduction à partir d'un plastisol ou d'un organosol comprenant une composition polymère selon l'une quelconque des revendications 1 et 2.

8. Revêtements selon la revendication 7, caractérisés par le fait que l'épaisseur de ladite couche est inférieure à 150 μm et peut descendre jusqu'à 70 μm.


**Revendications** pour l'Etat contractant: AT.

1. Procédé de préparation d'une composition polymère apte à donner des plastisols et des organosols conduisant, par enduction, à des revêtements présentant un aspect de surface mat, ladite composition comprenant au moins deux polymères du chlorure de vinyle, lesdits polymères étant des résines de dispersion dont les températures de prégélification présentent entre elles une différence au moins égale à 25°C et de prèférence à 30°C et dont le rapport pondèral de la résine dont la température de prégélification $\theta_1$ est la plus élevée à la résine dont la température de prégélification $\theta_2$ est la plus basse est compris entre 0,7 et 9 et de préférence entre 2 et 5, ladite composition étant sous forme d'un mélange desdites résines, procédé selon lequel on réalise une opération de séchage par atomisation sur chacun des latex desdites résines, puis une opération de broyage des agglomérats de polymère ainsi formés et la mise en silo des résines obtenues, ledit procédé étant caractérisé par le fait que les opérations de séchage par atomisation desdits latex sont réalisées dans un même appareil, séparément et par périodes alternées, et que les résines obtenues sont mises dans un même silo.

2. Procédé selon la revendication 1, caractérisé par le fait que les durées des périodes d'atomisation sont supérieures à 20 secondes.

3. Procédé selon l'une quelconque des revendications 1 et 2, caractérisé par le fait que les durées des périodes d'atomisation sont inférieures à 1800 secondes.

4. Procédé selon l'une quelconque des revendications 1 à 3, caractérisé par le fait que le silo est homogénéiseur.

5. Revêtements comportant une couche de surface exempte de défauts et présentant un aspect de surface mat, caractérisés par le fait que ladite couche est obtenue par enduction à partir d'un plastisol ou d'un organosol comprenant une composition polymère préparée par le procédé selon l'une quelconque des revendications 1 à 4.

6. Revêtements selon la revendication 5, caractérisés par le fait que l'épaisseur de ladite couche est inférieure à 150 μm et peut descendre jusqu'à 70 μm.


**Patentansprüche**

für die Vertragsstaaten BE, CH, DE, GB, IT, LI, LU, NL, SE

1. Polymermasse für Plastisole und Organosole, die beim Beschichten Überzüge mit einer matten Oberfläche ergeben, bestehend aus mindestens zwei Vinylchloridpolymeren, dadurch <u>gekennzeichnet</u>, daß die Polymere Dispersionsharze sind, deren Vorgelierungs-Temperaturen einen Unterschied von mindestens 25°C, vorzugsweise von 30°C, aufweisen und das Gewichtsverhältnis von Harz mit höchster Vorgelierungs-Temperatur $\theta_1$ zu Harz mit tiefster Vorgelierungs-Temperatur $\theta_2$ 0,7 bis 9, vorzugsweise 2 bis 5 bbeträgt.

2. Polymermasse nach Anspruch 1, dadurch <u>gekennzeichnet</u>, daß sie ein Gemisch der genannten Harze ist.

3. Verfahren zur Herstellung einer Polymermasse nach Anspruch 2, bei.dem jeder Latex der genannten Harze zerstäubungsgetrocknet wird, die dadurch erhaltenen Polymer-Agglomerate dann vermahlen und die erhaltenen Harze im Silo gelagert werden, dadurch <u>gekennzeichnet</u>, daß die Zerstäubungstrockung der Latices in der gleichen Vorrichtung getrennt und alternierend vorgenommen wird und daß die erhaltenen Harze in ein und demselben Silo gelagert werden.

4. Verfahren nach Anspruch 3, dadurch <u>gekennzeichnet</u>, daß die Zeitspannen beim Zerstäubungstrocknen mehr als 20 Sekunden betragen.

5. Verfahren nach einem der Ansprüche 3 und 4, dadurch <u>gekennzeichnet</u>, daß die Zeitspannen beim

**0 118 351**

Zerstäubungstrocknen weniger als 1 800 Sekunden betragen.

6. Verfahren nach einem der Ansprüche 3 bis 5, dadurch gekennzeichnet, daß der Silo ein Homogenisierapparat ist.

7. Überzüge mit einer fehlerfreien Oberflächenschicht von mattem Aussehen, dadurch gekennzeichnet, daß diese Schicht durch Beschichten mit einem Plastisol oder einem Organosol, das eine Polymermasse nach einem der Ansprüche 1 und 2 enthält, erhalten worden ist.

8. Überzüge nach Anspruch 7, dadurch gekennzeichnet, daß die Dicke der genannten Schicht 70 μm bis weniger als 150 μm beträgt.

## Claims

for the contracting States: BE, CH, DE, GB, IT, LI, LU, NL, SE.

1. Polymer composition capable of yielding plastisols and organosols producing, by means of a coating operation, coatings having a matt surface appearance, the said composition comprising at least two vinyl chloride polymers and being characterized in that the said polymers are dispersion resins whose pregelling temperatures differ 30°C and in which the weight ratio of the resin whose pregelling temperature $\theta_1$ is the higher to the resin whose pregelling temperature $\theta_2$ is the lower is between 0,7 and 9 and preferably between 2 and 5.

2. Polymer composition according to Claim 1, characterized in that it is in the form of a mixture of the said resins.

3. Process for the preparation of a polymer composition according to Claim 2, according to which a spraydrying operation is carried out on each of the latices of the said resins, followed by an operation of grinding the polymer agglomerates thus formed and placing the resins obtained in a silo, characterized in that the spray-drying operations of the said latices are performed in the same apparatus, separately and alterately, and that the resins obtained are placed in the same silo.

4. Process according to Claim 3, characterized in that the lengths of the spraying periods are greater than 20 seconds.

5. Process according to either of Claims 3 and 4, characterized in that the lengths of the spraying periods are less than 1,800 seconds.

6. Process according to any one of Claims 3 to 5, characterized in that the silo is a blender.

7. Coatings comprising a surface layer which is free from defects and has a matt surface appearance, which are characterized in that the said layer is produced by a coating operation from a plastisol or an organosol comprising a polymer composition according to either of Claims 1 and 2.

8. Coatings according to Claim 7, characterized in that the thickness of the said layer is less than 150 μm and may go down to 70 μm.

## Patentansprüche

für den Vertragsstaat AT

1. Verfahren zur Herstellung einer Polymermasse für Plastisole und Organosole, die beim Beschichten Überzüge mit einer matten Oberfläche ergeben, aus mindestens zwei Vinylchloridpolymeren, die Dispersionsharze sind, deren Vorgelierungs-Temperaturen einen Unterschied von mindestens 25°C, vorzugsweise von 30°C, aufweisen, wobei das Gewichtsverhältnis von Harz mit höchster Vorgelierungs-Temperatur $\theta_1$ zu Harz mit tiefster Vorgelierungs-Temperatur $\theta_2$ 0,7 bis 9, vorzugsweise 2 bis 5, beträgt, bei dem jeder Latex der genannten Harze zerstäubungsgetrocknet wird, die dadurch erhaltenen Polymer-Agglomerate dann vermahlen und die erhaltenen Harze im Silo gelagert werden, dadurch gekennzeichnet, daß die Zerstäubungstrocknung der Latices in der gleichen Vorrichtung: getrennt und alternierend vorgenommen wird und daß die erhaltenen Harze in ein und demselben Silo gelagert werden.

2. Verfahren nach Anspruch 1, dadurch gekennzeichnet, daß die Zeitspannen beim Zerstäubungstrocknen mehr als 20 Sekunden betragen.

3. Verfahren nach einem der Ansprüche 1 und 2, dadurch gekennzeichnet, daß die Zeitspannen beim Zerstäubungstrocknen weniger als 1800 Sekunden betragen.

4. Verfahren nach einem der Ansprüche 1 bis 3, dadurch gekennzeichnet, daß der Silo ein Homogenisierapparat ist.

5. Überzüge mit einer fehlerfreien Oberflächenschicht von mattem Aussehen, dadurch gekennzeichnet, daß diese Schicht durch Beschichten mit einem Plastisol oder einem Organosol, das eine nach einem der Ansprüche 1 bis 4 hergestellte Polymermasse enthält, erhalten worden ist.

6. Überzüge nach Anspruch 6, dadurch gekennzeichnet, daß die Dicke der genannten Schicht 70 μm bis weniger als 150μm beträgt.

14

**Claims**

for the contracting State AT

1. Process for the preparation of a polymer composition capable of yielding plastisols and organosols producing, by means of a coating operation, coatings having a matt surface appearance, the said composition comprising at least two vinyl chloride polymers, the said polymers being dispersion resins whose pregelling temperatures differ from each other by at least 20°C and preferably at least 30°C and in which the weight ratio of the resin whose pregelling temperature $\theta_1$ is the higher to the resin whose pregelling temperature $\theta_2$ is the lower is between 0,7 and 9 and preferably between 2 and 5, the said composition being in the form of a mixture of the said resins, process according to which a spray-drying operation is carried out on each of the latices of the said resins, followed by an operation of grinding the polymer agglomerates thus formed and placing the resins obtained in a silo, the said process being characterized in that the spraydrying operations of the said latices are performed in the same apparatus, separately and alternately, and that the resins obtained are placed in the same silo.

2. Process according to Claim 1, characterized in that the lengths of the spraying periods are greater than 20 seconds.

3. Process according to either of Claims 1 and 2, characterized in that the lengths of the spraying periods are less than 1,800 seconds.

4. Process according to any one of Claims 1 to 3, characterized in that the silo is a blender.

5. Coatings comprising a surface layer which is free from defects and has a matt surface appearance, which are characterized in that the said layer is produced by a coating operation from a plastisol or an organosol comprising a polymer composition according to either of Claims 1 to 4.

6. Coatings according to Claim 5, characterized in that the thickness of the said layer is less than 150 μm and may go down to 70 μm.

# FIG. 1